# EUROPÄISCHE PATENTSCHRIFT

(11) **EP 3 222 595 B1**
(45) Veröffentlichungstag und Bekanntmachung des Hinweises auf die Patenterteilung: **18.11.2020**
(21) Anmeldenummer: 17157766.1
(22) Anmeldetag: 24.02.2017
(51) Int. Cl.: F24C 15/10, C03C 17/00

(54) **KOCHFELDVORRICHTUNG**
HOTPLATE DEVICE
DISPOSITIF DE PLAQUE DE CUISSON

(30) Priorität: 21.03.2016 ES 201630336
(43) Veröffentlichungstag der Anmeldung: 27.09.2017
(73) Patentinhaber: BSH Hausgeräte GmbH, 81739 München (DE)
(72) Erfinder: Alaman Aguilar, Jorge, 50008 Zaragoza (ES); Camañes Vera, Victor, 50003 Zaragoza (ES); Ceamanos Gaya, Jesús, 50016 Zaragoza (ES); de Val Sanz, Erika, 50003 Zaragoza (ES); Gomez Bachiller, Patricia, 50002 Zaragoza (ES)

(56) Entgegenhaltungen:
- EP-A1- 2 796 432
- WO-A1-2015/068393
- DE-A1-102009 004 784
- DE-A1-102011 050 870
- DE-B3-102008 058 318

## Beschreibung

Die Erfindung betrifft eine Kochfeldvorrichtung nach dem Patentanspruch 1, sowie ein Verfahren zur Herstellung einer Kochfeldvorrichtung nach Anspruch 12.

Aus dem Stand der Technik ist bereits eine Kochfeldvorrichtung bekannt, welche eine Kochfeldplatte aufweist. In einem montierten Zustand weist die Kochfeldplatte an einer Unterseite der Kochfeldplatte eine Vielzahl von Vorsprüngen auf, welche im Wesentlichen gleichmäßig über die Unterseite der Kochfeldplatte verteilt angeordnet sind. In dem montierten Zustand ist unterhalb eines Teilbereichs der Kochfeldplatte eine Lichtquelle angeordnet, die in einem Betriebszustand sichtbares Licht zu einer Beleuchtung in dem Teilbereich der Kochfeldplatte emittiert. Der Teilbereich ist ein Bedienbereich, in welchem eine Bedienerschnittstelle angeordnet ist. Zu einer Erreichung einer vorteilhaften Beleuchtung in dem Teilbereich der Kochfeldplatte sind die Vorsprünge an dem Teilbereich in dem montierten Zustand von einem transparenten Schichtelement der Kochfeldvorrichtung umgeben. Das Schichtelement besteht aus einem einzigen Material. Die Druckschrift WO 2015/068393 A1 offenbart einen Heizkocher, welcher mit einer oberen Platte versehen ist, auf der ein Kochbehälter angeordnet ist; ein äußeres Gehäuse, dessen obere Platte auf seiner oberen Oberfläche vorgesehen ist und das einen Hauptkörper bildet; einen Heizkörper zum Erwärmen des Kochbehälters auf der oberen Platte; und eine Lichtemissionseinrichtung, die in dem Außengehäuse vorgesehen ist, wobei die Lichtemissionseinrichtung Informationen wie den vom Heizkörper ausgeführten Erwärmungszustand anzeigt, wobei die obere Platte aufweist: ein Glasbasismaterial, das aus einer transparenten durchscheinenden Glaskeramik mit geringer Ausdehnung aufgebaut ist mit Li2O-Al 2O3-Si2 als Hauptkomponente, einer festen β-Quarzlösung als Hauptkristall und einer Kristallgröße, die kleiner als die Wellenlänge des sichtbaren Lichts ist; eine Designschicht, die auf der unteren Oberfläche des Glasbasismaterials vorgesehen ist, wobei die Designschicht eine Farbe auf Schwarzbasis aufweist; einen Diffusionsbereich, der auf einem Teil der unteren Oberfläche der Designschicht vorgesehen ist, wobei der Diffusionsbereich ein Perlenpigment enthält, das durch Bedecken eines anorganischen Pigments mit einem Metalloxid erhalten wird und diffus Licht von der Lichtemissionseinrichtung emittiert; und eine Lichtschutzschicht, die auf mindestens Teilen der unteren Oberfläche der Designschicht außer dem Diffusionsbereich vorgesehen ist, wobei die Lichtschutzschicht ein anorganisches Pigment aufweist und Licht von unten abschirmt.

Die Druckschrift DE102011050870 A1 offenbart eine Anzeigevorrichtung mit einer transparenten eingefärbten Glaskeramik, die eine vorderseitige Anzeigeseite und eine rückwärtige Beleuchtungsseite aufweist, wobei im Bereich der Beleuchtungsseite mindestens ein Leuchtelement angeordnet ist. Auf der Glaskeramik ist mittelbar oder unmittelbar ein Licht-Kompensationsfilter in Form einer Farbschicht aufgebracht.

Die Druckschrift EP 2 796 432 A1 offenbart eine silberfarbene Glasplatte für einen Herd, sowie ein Verfahren zu ihrer Herstellung. Die Druckschrift offenbart eine Glasdeckplatte für einen Herd, die in einem Zustand verwendet wird, in dem ein Gegenstand über Silikonfett an der Rückseite angeklebt ist, und auf ein Verfahren zur Herstellung desselben. Die Glasdeckplatte weist ein Glassubstrat, eine perlmuttartige Lackschicht und eine hitzebeständige Lichtschutzschicht auf. Die perlmuttartige Farbschicht wird gebildet, indem ein Farbbeschichtungsmaterial, das ein spezifisches Additiv, ein Siliciumdioxid bildendes Material und ein perlmuttartiges Pigment enthält, auf die Rückseite des Glassubstrats aufgebracht und gebrannt wird.

Die Druckschrift DE 102009004784 A1 offenbart die Erstellung und Verwendung einer Grauton-Palette für dekorative Beschichtungen auf Basis eines Sol-Gel-Verfahrens von Glas und insbesondere Glaskeramik-Artikeln, wobei nicht-plättchenförmige Pigmente und Festschmierstoff in bestimmten Massenverhältnissen als Dekorpigmente eingesetzt werden. Unterschiedliche Farbtöne können durch die Variation des Festschmierstoff-Gehalts der Dekorpigmente erreicht werden.

Die Druckschrift DE102008058318 B3 offenbart ein Funktionselement mit einem flächigen Substrat bestehend aus Glas oder Glaskeramik, wobei auf das Substrat eine Beschichtung aufgebracht ist, die ein vernetztes Polysiloxan aufweist. Auf die Beschichtung ist eine Deckschicht aufgebracht ist, die ein unvernetztes Polysiloxan aufweist.

Die Aufgabe der Erfindung besteht insbesondere darin, eine gattungsgemäße Vorrichtung mit verbesserten Eigenschaften hinsichtlich einer Beleuchtung bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird eine Kochfeldvorrichtung, insbesondere eine Induktionskochfeldvorrichtung, mit zumindest einer Kochfeldplatte und mit zumindest einem wenigstens teilweise transluzenten Schichtelement vorgeschlagen, welches in wenigstens einem montierten Zustand an zumindest einem Teilbereich einer Unterseite der Kochfeldplatte angeordnet ist und welches zumindest ein wenigstens teilweise lichtdurchlässiges Trägermaterial und zumindest ein lichtundurchlässiges Füllmaterial aufweist. Unter einer "Kochfeldvorrichtung", insbesondere unter einer "Induktionskochfeldvorrichtung", soll insbesondere zumindest ein Teil, insbesondere eine Unterbaugruppe, eines Kochfelds, insbesondere eines Induktionskochfelds, verstanden werden. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Kochfeldaußengehäuses, insbesondere der Kochfeldvorrichtung und/oder eines die Kochfeldvorrichtung aufweisenden Kochfelds, auszubilden. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Insbesondere ist das Schichtelement in dem montierten Zustand an dem Teilbereich der Unterseite der Kochfeldplatte angeordnet und vorteilhaft von der Kochfeldplatte getragen und/oder gehalten. Das Schichtelement weist insbesondere eine wenigstens im Wesentlichen plattenförmige Gestalt auf. Insbesondere weist das Schichtelement eine Längserstreckung und eine senkrecht zu der Längserstreckung ausgerichtete Quererstreckung auf, welche wesentlich größer sind als eine senkrecht zu der Längserstreckung und zu der Quererstreckung ausgerichtete Materialstärke des Schichtelements. Ein jeweiliger Wert der Längserstreckung des Schichtelements und der Quererstreckung des Schichtelements sind insbesondere mindestens 3-mal, vorteilhaft mindestens 5-mal, besonders vorteilhaft mindestens 10-mal, vorzugsweise mindestens 20-mal und besonders bevorzugt mindestens 50-mal so groß wie die Materialstärke des Schichtelements. Insbesondere weist das Schichtelement eine Materialstärke auf, die maximal 100 %, insbesondere maximal 80 %, vorteilhaft maximal 60 %, besonders vorteilhaft maximal 50 %, vorzugsweise maximal 25 % und besonders bevorzugt maximal 10 % einer Materialstärke der Kochfeldplatte beträgt, an welcher das Schichtelement in dem montierten Zustand angeordnet ist. Insbesondere weist das Schichtelement eine Materialstärke von maximal 4 mm, insbesondere von maximal 3,5 mm, vorteilhaft von maximal 3 mm, besonders vorteilhaft von maximal 2,5 mm, vorzugsweise von maximal 2 mm, besonders bevorzugt maximal 1,5 mm und vorzugsweise maximal 1 mm auf. Unter einem "wenigstens teilweise transluzenten" Schichtelement soll insbesondere ein Schichtelement verstanden werden, welches zumindest einen transluzenten Abschnitt aufweist und insbesondere zusätzlich zu dem transluzenten Abschnitt zumindest einen weiteren Abschnitt aufweisen könnte, welcher hinsichtlich einer Lichttransmission und/oder Lichtabsorption eine von einer Transluzenz verschiedene Eigenschaft aufweisen könnte. Das wenigstens teilweise transluzente Schichtelement könnte beispielsweise zumindest einen transluzenten Abschnitt mit einer Erstreckung aufweisen, welche kleiner sein könnte als eine gesamte Erstreckung des Schichtelements. Beispielsweise könnte das wenigstens teilweise transluzente Schichtelement, insbesondere alternativ zu dem transluzenten Abschnitt mit der Erstreckung kleiner als die gesamte Erstreckung des Schichtelements, zumindest einen transluzenten Abschnitt mit einer Erstreckung aufweisen, welche wenigstens im Wesentlichen identisch mit einer gesamten Erstreckung des Schichtelements sein könnte. Alternativ oder zusätzlich könnte das wenigstens teilweise transluzente Schichtelement zumindest ein transluzentes Material und insbesondere zusätzlich zu dem transluzenten Material zumindest ein von einem transluzenten Material abweichendes weiteres Material aufweisen. Vorteilhaft erstreckt sich das Schichtelement in dem montierten Zustand wenigstens im Wesentlichen über den gesamten Teilbereich der Unterseite der Kochfeldplatte und ist insbesondere wenigstens im Wesentlichen in dem gesamten Teilbereich der Unterseite der Kochfeldplatte wenigstens teilweise transluzent ausgebildet. Unter einem "transluzenten" Material soll insbesondere ein Material verstanden werden, welches in zumindest einem Block-Zustand, in welchem das Material in Form eines Blocks angeordnet ist und insbesondere als Blockmaterial vorliegt, wenigstens im Wesentlichen transluzent ist. Unter einem "Block-Zustand" eines Materials soll ein Zustand verstanden werden, in welchem das Material in Form eines Würfels mit einer Kantenlänge von mindestens 1 cm, insbesondere von mindestens 2 cm, vorteilhaft von mindestens 3 cm, besonders vorteilhaft von mindestens 5 cm und vorzugsweise von mindestens 10 cm vorliegt. Unter einem "montierten" Zustand soll insbesondere ein funktionsfähiger Zustand in einer Einbaulage verstanden werden, in welchem Kochfeldkomponenten, insbesondere der Kochfeldvorrichtung und/oder eines die Kochfeldvorrichtung aufweisenden Kochfelds, in einer vorbestimmten Position angeordnet sind. Die Unterseite der Kochfeldplatte ist in dem montierten Zustand insbesondere einem Bediener abgewandt und/oder unzugänglich angeordnet. Insbesondere ist die Unterseite der Kochfeldplatte in dem montierten Zustand einem Untergrund zugewandt angeordnet. Der Untergrund könnte beispielsweise ein Boden, insbesondere ein Fußboden, sein, auf welchem ein die Kochfeldvorrichtung aufweisendes Kochfeld in dem montierten Zustand insbesondere aufgestellt sein könnte. Der Teilbereich der Unterseite der Kochfeldplatte könnte beispielsweise eine Erstreckung aufweisen, welche kleiner sein könnte als eine Erstreckung der Unterseite. Alternativ könnte der Teilbereich der Unterseite der Kochfeldplatte beispielsweise eine Erstreckung aufweisen, welche wenigstens im Wesentlichen einer Erstreckung der Unterseite entsprechen könnte. Unter einem "wenigstens teilweise lichtdurchlässigen" Trägermaterial soll insbesondere ein Trägermaterial verstanden werden, welches dazu vorgesehen ist, zumindest einen gewissen Prozentsatz und/oder zumindest einen gewissen Wellenlängenbereich von auf das Trägermaterial auftreffendem sichtbarem Licht zu transmittieren. Beispielsweise könnte das Trägermaterial dazu vorgesehen sein, zumindest einen ersten Wellenlängenbereich von auf das Trägermaterial auftreffendem sichtbarem Licht wenigstens im Wesentlichen zu transmittieren und insbesondere zumindest einen zweiten, sich von dem ersten Wellenlängenbereich unterscheidenden Wellenlängenbereich von auf das Trägermaterial auftreffendem sichtbarem Licht wenigstens im Wesentlichen zu absorbieren. Ein Wellenlängenbereich könnte beispielsweise durch eine Lichtfarbe gekennzeichnet sein, wie beispielsweise rot und/oder grün und/oder blau und/oder violett und/oder gelb und/oder orange. Beispielsweise könnte das Trägermaterial dazu vorgesehen sein, einen Anteil von mindestens 50 %, insbesondere von mindestens 60 %, vorteilhaft von mindestens 70 %, besonders vorteilhaft von mindestens 80 %, vorzugsweise von mindestens 90 % und besonders bevorzugt von mindestens 95 % von auf das Trägermaterial auftreffendem sichtbarem Licht zu transmittieren. Das Trägermaterial könnte beispielsweise zumindest einen lichtdurchlässigen Abschnitt und insbesondere zusätzlich zu dem lichtdurchlässigen Abschnitt zumindest einen lichtundurchlässigen weiteren Abschnitt aufweisen. Beispielsweise könnte das Trägermaterial zumindest ein lichtdurchlässiges Material und insbesondere zusätzlich zu dem lichtdurchlässigen Material zumindest ein lichtundurchlässiges weiteres Material aufweisen. Alternativ könnte das Trägermaterial beispielsweise ausschließlich zumindest einen lichtdurchlässigen Abschnitt aufweisen. Das Trägermaterial könnte beispielsweise transparent und/oder transluzent ausgebildet sein. Unter "sichtbarem Licht" soll insbesondere elektromagnetische Strahlung aus einem Wellenlängenbereich von 380 nm bis 780 nm verstanden werden. Unter einem "lichtdurchlässigen" Material soll ein Material verstanden werden, welches in zumindest einem Block-Zustand, in welchem das Material in Form eines Blocks angeordnet ist und insbesondere als Blockmaterial vorliegt, wenigstens im Wesentlichen lichtdurchlässig ist und welches insbesondere dazu vorgesehen ist, in dem Block-Zustand einen Anteil von mindestens 90 %, insbesondere von mindestens 92 %, vorteilhaft von mindestens 95 %, besonders vorteilhaft von mindestens 97 %, vorzugsweise von mindestens 98 % und besonders bevorzugt von mindestens 99 % von auf das Material auftreffendem sichtbarem Licht zu transmittieren. Insbesondere ist ein lichtdurchlässiges Material transparent und/oder durchsichtig. Unter einem "Trägermaterial" soll insbesondere ein Material verstanden werden, welches zumindest eine Trägerstruktur aufweist, die dazu vorgesehen ist, zumindest ein Füllmaterial, insbesondere mittels zumindest einer chemischen Reaktion und/oder mittels zumindest einer chemischen Verbindung, aufzunehmen und/oder einzubinden und/oder einzugliedern. Beispielsweise könnte das Trägermaterial eine kristalline und/oder teilkristalline und/oder amorphe Trägerstruktur aufweisen. Insbesondere ist das Trägermaterial aus zumindest einem Trägerausgangsmaterial hergestellt. Beispielsweise könnte das Trägermaterial wenigstens im Wesentlichen identisch mit dem Trägerausgangsmaterial sein und insbesondere wenigstens im Wesentlichen die gleichen chemischen Eigenschaften aufweisen wie das Trägerausgangsmaterial. Alternativ oder zusätzlich könnte sich das Trägermaterial in zumindest einer, insbesondere chemischen Eigenschaft von dem Trägerausgangsmaterial unterscheiden. Beispielsweise könnte das Trägermaterial wenigstens zu einem Großteil oxidiertes Trägerausgangsmaterial aufweisen. Insbesondere könnte das Trägermaterial eine hohe Haftfestigkeit aufweisen, welche insbesondere einen Wert von wenigstens im Wesentlichen 0,25 (N/mm²) aufweisen könnte. Das Trägermaterial könnte beispielsweise ein Einkomponenten-Material und/oder ein acetat-aushärtendes Material sein. Beispielsweise könnte das Trägermaterial ein Verkapselungsstoff sein, insbesondere ein Einkomponenten-Verkapselungsstoff. Unter einem "lichtundurchlässigen" Material soll ein Material verstanden werden, welches zumindest in einem Block-Zustand, in welchem das Material in Form eines Blocks angeordnet ist und insbesondere als Blockmaterial vorliegt, wenigstens im Wesentlichen lichtundurchlässig ist und welches insbesondere dazu vorgesehen ist, in dem Block-Zustand einen Anteil von mindestens 90 %, insbesondere von mindestens 92 %, vorteilhaft von mindestens 95 %, besonders vorteilhaft von mindestens 97 %, vorzugsweise von mindestens 98 % und besonders bevorzugt von mindestens 99 % von auf das Material auftreffendem sichtbarem Licht zu absorbieren. Insbesondere ist ein lichtundurchlässiges Material opak und/oder undurchsichtig. Unter einem "Füllmaterial" soll insbesondere ein Material verstanden werden, welches zu einer Aufnahme und/oder Einbindung und/oder Eingliederung in zumindest ein Trägermaterial, insbesondere in zumindest eine Trägerstruktur eines Trägermaterials, vorgesehen ist. Insbesondere ist das Füllmaterial dazu vorgesehen, chemisch mit dem Trägermaterial zu reagieren und insbesondere mittels der chemischen Reaktion eine chemische Verbindung mit dem Trägermaterial einzugehen. Insbesondere ist das Füllmaterial aus zumindest einem Füllausgangsmaterial hergestellt. Beispielsweise könnte das Füllmaterial wenigstens im Wesentlichen identisch mit dem Füllausgangsmaterial sein und insbesondere wenigstens im Wesentlichen die gleichen chemischen Eigenschaften aufweisen wie das Füllausgangsmaterial. Alternativ oder zusätzlich könnte sich das Füllmaterial in zumindest einer, insbesondere chemischen Eigenschaft von dem Füllausgangsmaterial unterscheiden. Beispielsweise könnte das Füllmaterial wenigstens zu einem Großteil oxidiertes Füllausgangsmaterial aufweisen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können insbesondere eine optimale Beleuchtung mit vorteilhaften Beleuchtungseigenschaften erreicht werden. Insbesondere kann eine einfache Herstellung der Kochfeldvorrichtung erzielt werden, da eine Anordnung des Schichtelements an dem Teilbereich der Unterseite der Kochfeldplatte insbesondere automatisch und/oder computergesteuert erfolgen kann. Dadurch kann insbesondere eine Kombination mit zumindest einer weiteren Bearbeitung der Kochfeldplatte ermöglicht werden, wie beispielsweise mit einer Bearbeitung der Unterseite der Kochfeldplatte mittels Laser, wodurch insbesondere eine besonders qualitativ hochwertige und/oder gezielte Beleuchtung mit erwünschten und/oder gezielt einstellbaren Beleuchtungseigenschaften erzielt werden kann.

Ferner wird vorgeschlagen, dass das Trägermaterial aus zumindest einem wenigstens im Wesentlichen zähflüssigen Trägerausgangsmaterial hergestellt ist. Insbesondere weist das Trägerausgangsmaterial und vorteilhaft zusätzlich das Trägermaterial eine Viskosität von mindestens 0,1 mPa*s, insbesondere von mindestens 1 mPa*s, vorteilhaft von mindestens 10 mPa*s, besonders vorteilhaft von mindestens 100 mPa*s und vorzugsweise von mindestens 1000 mPa*s auf. Insbesondere weist das Trägerausgangsmaterial und vorteilhaft zusätzlich das Trägermaterial eine Viskosität von maximal 10⁷ mPa*s, insbesondere von maximal 10⁶ mPa*s, vorteilhaft von maximal 10⁵ mPa*s, besonders vorteilhaft von maximal 5*10⁴ mPa*s und vorzugsweise von maximal 2*10⁴ mPa*s auf. Das Trägerausgangsmaterial und vorteilhaft zusätzlich das Trägermaterial weist insbesondere eine Viskosität in einem Bereich von 1700 mPa*s bis 2000 mPa*s auf. Dadurch kann das Trägermaterial, und insbesondere das Schichtelement, insbesondere einfach an dem Teilbereich der Unterseite der Kochfeldplatte angeordnet werden, da insbesondere eine ungewollte und/oder zu schnelle Ausbreitung des Trägermaterials und/oder des Schichtelements an dem Teilbereich vermieden werden kann. Insbesondere kann das Füllmaterial einfach in das Trägermaterial integriert werden.

Beispielsweise könnte das Trägermaterial ein Metall sein. Vorzugsweise ist das Trägermaterial ein Nichtmetall. Dadurch können insbesondere besonders vorteilhafte Beleuchtungseigenschaften des Trägermaterials erzielt werden.

Das Trägermaterial ist insbesondere ein Kunststoff und vorteilhaft ein Polymer, besonders vorteilhaft ein synthetisches Polymer. Vorzugsweise ist das Trägermaterial ein Silikon, insbesondere ein Poly(organo)siloxan. Dadurch kann insbesondere eine preisgünstige Ausgestaltung erzielt werden.

Das Füllmaterial ist zumindest Granulat-förmig ausgebildet. Unter einem "zumindest granulat-förmigen" Füllmaterial soll insbesondere ein Füllmaterial verstanden werden, welches vorteilhaft eine Vielzahl an Körnern umfasst und welches insbesondere lose granulat-förmig ausgebildet ist, insbesondere in einem betriebsbereiten Zustand. Insbesondere sind einzelne Körner des Füllmaterials in einem betriebsbereiten Zustand und bei Anordnung in freiem Raum zumindest weitgehend unabhängig voneinander bewegbar. Insbesondere rieselt das sich in betriebsbereitem Zustand befindliche, zumindest granulat-förmige Füllmaterial bei Öffnen zumindest eines Behälters, in dem das Füllmaterial angeordnet ist, aus dem Behälter heraus. Vorteilhaft können einzelne Körner frei aus einer Vielzahl an Körnern herausgegriffen und/oder hinzugefügt werden. Dadurch kann das Füllmaterial insbesondere besonders einfach in das Trägermaterial integriert werden.

Zudem wird vorgeschlagen, dass das Füllmaterial ein Metalloxid ist, wodurch insbesondere eine hohe Beständigkeit des Füllmaterials, insbesondere in sauerstoffreicher Umgebung, und damit verbunden insbesondere eine einfache und/oder unkomplizierte Handhabung des Füllmaterials erzielt werden kann.

Weiterhin wird vorgeschlagen, dass das Füllmaterial ein Aluminiumoxid ist. Insbesondere ist das Füllmaterial dazu vorgesehen, hohen Temperaturen, insbesondere unter Vermeidung einer Beschädigung des Füllmaterials, zu widerstehen. Dadurch kann insbesondere eine preisgünstige Ausgestaltung erreicht werden.

Beispielsweise könnte die Kochfeldplatte in dem Teilbereich zumindest eine Vertiefung aufweisen, welche in dem montierten Zustand insbesondere wenigstens im Wesentlichen mit dem Schichtelement gefüllt sein könnte. Vorzugsweise weist die Kochfeldplatte in dem Teilbereich zumindest einen Vorsprung auf, welcher in dem montierten Zustand wenigstens im Wesentlichen von dem Schichtelement umgeben und vorteilhaft überzogen ist. Der Vorsprung weist insbesondere eine wenigstens im Wesentlichen halbkugelförmige Gestalt auf. Insbesondere weist der Vorsprung einen Durchmesser von wenigstens im Wesentlichen 2 mm auf. Insbesondere weist die Kochfeldplatte in dem Teilbereich zumindest zwei, insbesondere zumindest drei, vorteilhaft zumindest fünf und vorzugsweise mehrere Vorsprünge auf. Die Vorsprünge sind insbesondere in einem regelmäßigen Muster und vorteilhaft in Form einer Matrix angeordnet. Insbesondere sind die Vorsprünge wenigstens im Wesentlichen über die, insbesondere gesamte Unterseite der Kochfeldplatte wenigstens im Wesentlichen gleichverteilt angeordnet. Dadurch kann insbesondere eine hohe mechanische Härte und/oder eine hohe mechanische Beständigkeit erzielt werden.

Zudem wird vorgeschlagen, dass das Schichtelement in dem Teilbereich eine Materialstärke von zumindest einer Höhe des Vorsprungs in Bezug auf einen Grundkörper der Kochfeldplatte aufweist. Insbesondere weist die Kochfeldplatte zumindest den Grundkörper auf, welcher insbesondere eine wenigstens im Wesentlichen quaderförmige und/oder plattenförmige Gestalt aufweist. Der Vorsprung ist insbesondere mit dem Grundkörper verbunden und springt insbesondere von dem Grundkörper hervor. Die Höhe des Vorsprungs ist insbesondere wenigstens im Wesentlichen senkrecht zu einer nächstgelegenen Oberfläche des Grundkörpers ausgerichtet. Insbesondere ist die nächstgelegene Oberfläche des Grundkörpers wenigstens im Wesentlichen parallel zu einer Haupterstreckungsebene des Grundkörpers ausgerichtet und insbesondere an der Unterseite der Kochfeldplatte angeordnet. Insbesondere entspricht die Höhe des Vorsprungs wenigstens im Wesentlichen einem Radius des Vorsprungs. Die Materialstärke des Schichtelements in dem Teilbereich ist insbesondere wenigstens im Wesentlichen senkrecht zu der nächstgelegenen Oberfläche des Grundkörpers ausgerichtet. Dadurch kann insbesondere eine einfache Anordnung des Schichtelements an dem Teilbereich der Unterseite der Kochfeldplatte erreicht werden.

Beispielsweise könnten das Schichtelement und die Kochfeldplatte voneinander verschiedene Brechungsindizes aufweisen, wodurch beispielsweise eine verbesserte Lichtstreuung erreicht werden könnte. Vorzugsweise weisen das Schichtelement und die Kochfeldplatte zumindest vergleichbare Brechungsindizes auf. Unter "zumindest vergleichbaren" Brechungsindizes sollen insbesondere Brechungsindizes verstanden werden, welche vergleichbar oder gleich sind. Unter "vergleichbaren" Brechungsindizes sollen insbesondere Brechungsindizes verstanden werden, bei welchen ein Betrag einer Differenz der Brechungsindizes, insbesondere ein Betrag einer Differenz eines Brechungsindex des Schichtelements und eines Brechungsindex der Kochfeldplatte, maximal 0,5, insbesondere maximal 0,3, vorteilhaft maximal 0,2, besonders vorteilhaft maximal 0,1, vorzugsweise maximal 0,05 und besonders bevorzugt maximal 0,02 beträgt. Das Schichtelement und die Kochfeldplatte weisen insbesondere jeweils einen Brechungsindex in einem Bereich von 0,5 bis 2,5, insbesondere von 0,75 bis 2,25, vorteilhaft von 1 bis 2 und vorzugsweise von 1,25 bis 1,75 auf. Insbesondere sind ein Brechungsindex des Schichtelements und ein Brechungsindex der Kochfeldplatte wenigstens im Wesentlichen gleich. Das Schichtelement und die Kochfeldplatte weisen insbesondere jeweils einen Brechungsindex von wenigstens im Wesentlichen 1,5 auf. Dadurch kann insbesondere eine optimale und/oder gleichmäßige Lichtstreuung und damit verbunden insbesondere eine besonders vorteilhafte Beleuchtung ermöglicht werden.

Ferner wird vorgeschlagen, dass die Kochfeldvorrichtung zumindest eine wenigstens im Wesentlichen punktförmige Lichtquelle aufweist, wobei das Schichtelement dazu vorgesehen ist, in wenigstens einem Betriebszustand zumindest ein von der Lichtquelle ausgehendes Lichtstrahlbündel zumindest wesentlich zu zerstreuen. Die Lichtquelle könnte beispielsweise zumindest einen Laser aufweisen. Vorteilhaft weist die Lichtquelle zumindest eine LED und/oder zumindest ein OLED auf. Insbesondere ist die Lichtquelle dazu vorgesehen, elektromagnetische Strahlung, insbesondere sichtbares Licht, in Form des Lichtstrahlbündels zu emittieren. Das Schichtelement ist insbesondere dazu vorgesehen, das von der Lichtquelle emittierte Lichtstrahlbündel in diffuse elektromagnetische Strahlung, insbesondere in diffuses Licht, zu überführen. Unter einem "Lichtstrahlbündel" soll insbesondere eine Vielzahl an wenigstens im Wesentlichen parallel zueinander ausgerichteten Lichtstrahlen verstanden werden. Dadurch kann insbesondere eine gleichmäßige Beleuchtung erzielt werden. Insbesondere kann eine Sichtbarkeit der punktförmigen Lichtquelle von einer Oberseite der Kochfeldplatte her betrachtet vermieden werden.

Besonders vorteilhafte Beleuchtungseigenschaften können insbesondere erreicht werden durch ein Kochfeld, insbesondere durch ein Induktionskochfeld, mit zumindest einer erfindungsgemäßen Kochfeldvorrichtung, insbesondere mit zumindest einer erfindungsgemäßen Induktionskochfeldvorrichtung.

Die vorteilhaften Beleuchtungseigenschaften können insbesondere weiter gesteigert werden durch ein Verfahren zur Herstellung einer erfindungsgemäßen Kochfeldvorrichtung, insbesondere einer erfindungsgemäßen Induktionskochfeldvorrichtung, wobei das Schichtelement wenigstens teilweise durch ein Vermengen von zumindest einem Trägerausgangsmaterial und zumindest einem Füllausgangsmaterial hergestellt und anschließend an dem Teilbereich der Unterseite der Kochfeldplatte angeordnet wird. Insbesondere wird das Schichtelement nach einer Anordnung des Schichtelements an dem Teilbereich der Unterseite der Kochfeldplatte ausgehärtet. Insbesondere ist das Schichtelement zumindest im Anschluss an eine Aushärtung eines Gemischs aus dem Trägerausgangsmaterial und dem Füllausgangsmaterial wenigstens im Wesentlichen transluzent. Beispielsweise könnte das Schichtelement erst beim Aushärten wenigstens im Wesentlichen transluzent werden. Insbesondere könnte sich, insbesondere zusätzlich zu einem Aggregatzustand, zumindest eine insbesondere chemische Eigenschaft des Schichtelements bei dem Aushärten verändern. Alternativ könnte das Gemisch aus dem Trägerausgangsmaterial und dem Füllausgangsmaterial bereits vor dem Aushärten wenigstens im Wesentlichen transluzent sein.

Die Kochfeldvorrichtung soll hierbei nicht auf die oben beschriebene Anwendung und Ausführungsform beschränkt sein. Insbesondere kann die Kochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Kochfeldvorrichtung in einer schematischen Draufsicht und
- Fig. 2: eine Kochfeldplatte, ein Schichtelement und eine Lichtquelle der Kochfeldvorrichtung, wobei die Lichtquelle in einem Verhältnis zu der Kochfeldplatte und dem Schichtelement wesentlich kleiner dargestellt ist und wobei auf eine Darstellung von weiterer Kochfeldkomponenten, wie beispielsweise zumindest einer Heizeinheit und/oder einer Steuereinheit und/oder einer Bedienerschnittstelle, verzichtet wurde, in einer schematischen Schnittdarstellung.

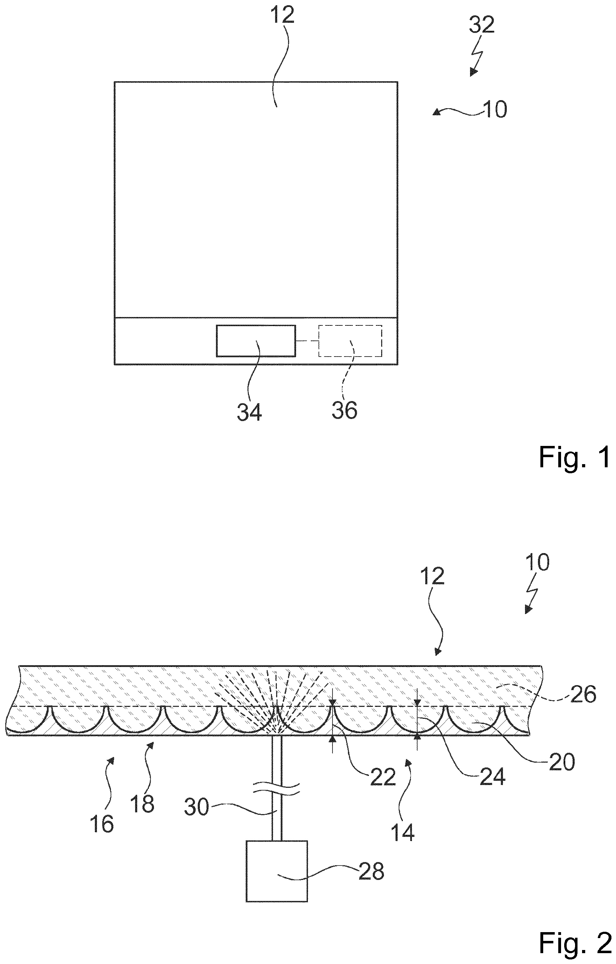

Fig. 1 zeigt ein Kochfeld 32, das als ein Induktionskochfeld ausgebildet ist, mit einer Kochfeldvorrichtung 10, die als eine Induktionskochfeldvorrichtung ausgebildet ist.

Die Kochfeldvorrichtung 10 weist eine Bedienerschnittstelle 34 zu einer Eingabe und/oder Auswahl von Betriebsparametern auf, beispielsweise einer Heizleistung und/oder einer Heizleistungsdichte und/oder einer Heizzone. Die Bedienerschnittstelle 34 ist zu einer Ausgabe eines Werts eines Betriebsparameters an einen Bediener vorgesehen.

Die Kochfeldvorrichtung 10 weist eine Steuereinheit 36 auf. Die Steuereinheit 36 ist dazu vorgesehen, in Abhängigkeit von mittels der Bedienerschnittstelle 34 eingegebener Betriebsparameter Aktionen auszuführen und/oder Einstellungen zu verändern. Die Steuereinheit 36 regelt in einem Heizbetriebszustand eine Energiezufuhr zu Heizeinheiten.

Die Kochfeldvorrichtung 10 weist mehrere Heizeinheiten (nicht dargestellt) auf. Beispielsweise könnten die Heizeinheiten in Form einer Matrix angeordnet sein. Die Heizeinheiten könnten insbesondere Teil eines variablen Kochflächenbereichs sein. Alternativ könnten die Heizeinheiten insbesondere Teil eines klassischen Kochfelds sein, bei welchem insbesondere durch eine Position der Heizeinheiten definierte, fest vorgegebene Heizzonen existieren könnten, welche insbesondere auf einer Kochfeldplatte markiert sein könnten.

Die Heizeinheiten sind dazu vorgesehen, auf einer Kochfeldplatte 12 oberhalb der Heizeinheiten aufgestelltes Gargeschirr zu erhitzen. Die Heizeinheiten sind als Induktionsheizeinheiten ausgebildet. In einer Einbaulage sind die Heizeinheiten in einer Vertikalrichtung unterhalb der Kochfeldplatte 12 angeordnet.

Die Kochfeldvorrichtung 10 weist die Kochfeldplatte 12 auf. Die Kochfeldplatte 12 ist zu einem Aufstellen von Gargeschirr zu einer Beheizung vorgesehen. In einem montierten Zustand bildet die Kochfeldplatte 12 einen Teil eines Kochfeldaußengehäuses aus. Die Kochfeldplatte 12 bildet in dem montierten Zustand gemeinsam mit einer Außengehäuseeinheit das Kochfeldaußengehäuse im Wesentlichen aus.

Die Kochfeldvorrichtung 10 weist ein teilweise transluzentes Schichtelement 14 auf (vgl. Fig. 2). Das Schichtelement 14 ist in dem montierten Zustand in einem Teilbereich 16 einer Unterseite 18 der Kochfeldplatte 12 angeordnet.

Im vorliegenden Ausführungsbeispiel ist das Schichtelement 14 über einen Großteil der Unterseite 18 der Kochfeldplatte 12 angeordnet. Der Teilbereich 16 erstreckt sich über einen Großteil der Unterseite 18 der Kochfeldplatte 12. Der Teilbereich 16 erstreckt sich im Wesentlichen über eine gesamte Unterseite 18 der Kochfeldplatte 12 mit Ausnahme eines weiteren Teilbereichs der Unterseite 18 der Kochfeldplatte 12, an welchem die Bedienerschnittstelle 34 angeordnet ist.

Das Schichtelement 14 weist ein teilweise lichtdurchlässiges Trägermaterial auf. Das Trägermaterial ist aus einem im Wesentlichen zähflüssigen Trägerausgangsmaterial hergestellt. Das Trägermaterial ist ein Nichtmetall. Im vorliegenden Ausführungsbeispiel ist das Trägermaterial ein Silikon.

Das Schichtelement 14 weist ein lichtundurchlässiges Füllmaterial auf. Das Füllmaterial ist ein Metalloxid. Im vorliegenden Ausführungsbeispiel ist das Füllmaterial ein Aluminiumoxid. Das Füllmaterial ist zumindest Granulat-förmig ausgebildet. Körner des Füllmaterials weisen eine Korngröße in einem Bereich von 0,4 µm bis 0,9 µm auf.

In einem Verfahren zur Herstellung der Kochfeldvorrichtung 10 wird das Schichtelement 14 teilweise durch ein Vermengen von dem Trägerausgangsmaterial und einem Füllausgangsmaterial hergestellt.

Das Füllmaterial ist aus dem Füllausgangsmaterial hergestellt. Das Füllausgangsmaterial ist zumindest Granulat-förmig ausgebildet. Körner des Füllausgangsmaterials weisen eine Korngröße in einem Bereich von 0,4 µm bis 9 µm auf.

In dem Verfahren wird eine gewisse Menge des Füllausgangsmaterials abgewogen. Die gewisse Menge des Füllausgangsmaterials wird auf Basis eines zu erreichenden Verhältnisses zwischen dem Trägermaterial und dem Füllmaterial errechnet. Das abgewogene Füllausgangsmaterial wird gemahlen. Die Korngröße der Körner des Füllausgangsmaterials wird bei dem Mahlen des Füllausgangsmaterials verkleinert. Das Füllausgangsmaterial wird so lange gemahlen, bis die Korngröße der Körner des Füllausgangsmaterials einen Wert in einem Bereich von 0,4 µm bis 0,9 µm aufweist. Durch Mahlen des Füllausgangsmaterials wird das Füllmaterial hergestellt. Insbesondere wird durch die Korngröße des Füllmaterials, welche insbesondere durch das Mahlen des Füllausgangsmaterials erreicht wird, bei der Vermengung des Trägerausgangsmaterials und des Füllausgangsmaterials eine Aggregatbildung vermieden und/oder eine im Wesentlichen homogene Mischung zwischen dem Trägerausgangsmaterial und dem Füllausgangsmaterial erreicht.

In dem Verfahren wird eine gewisse Menge des Trägerausgangsmaterials abgewogen. Die gewisse Menge des Trägerausgangsmaterials wird auf Basis eines zu erreichenden Verhältnisses zwischen dem Trägermaterial und dem Füllmaterial errechnet. Das abgewogene Trägerausgangsmaterial wird in ein Gefäß gegeben.

Direkt im Anschluss an das Geben des abgewogenen Trägerausgangsmaterials in das Gefäß wird das gemahlene Füllausgangsmaterial zu dem abgewogenen Trägerausgangsmaterial hinzugegeben. Anschließend wird das Gemisch aus dem Trägerausgangsmaterial und dem Füllausgangsmaterial, insbesondere intensiv und/oder lange, miteinander verrührt. Das Gemisch aus dem Trägerausgangsmaterial und dem Füllausgangsmaterial wird so lange miteinander verrührt, bis eine gewünschte Homogenität erreicht ist.

Beispielsweise könnte das Gemisch aus dem Trägerausgangsmaterial und dem Füllausgangsmaterial mittels einer, insbesondere automatischen und/oder manuellen und beispielsweise magnetischen, Verrührungstechnik miteinander verrührt werden.

Im vorliegenden Ausführungsbeispiel wird ein Verhältnis einer Menge an Trägermaterial von im Wesentlichen 1 ml und einer Menge an Füllmaterial in einem Bereich von 10 mg bis 25 mg, vorteilhaft einer Menge an Füllmaterial von im Wesentlichen 10 mg, verwendet.

Das Gemisch aus dem Trägerausgangsmaterial und dem Füllausgangsmaterial weist im vorliegenden Ausführungsbeispiel eine hohe Dichte auf, insbesondere aufgrund einer Zähflüssigkeit des Trägerausgangsmaterials und/oder eines Anteils des Füllausgangsmaterials in dem Trägerausgangsmaterial.

Anschließend an das Vermengen, und insbesondere an das Verrühren, des Trägerausgangsmaterials und des Füllausgangsmaterials wird das Schichtelement 14 an dem Teilbereich 16 der Unterseite 18 der Kochfeldplatte 12 angeordnet. Durch die hohe Dichte des Gemischs aus dem Trägerausgangsmaterial und dem Füllausgangsmaterial könnte bei der Anordnung des Schichtelements an dem Teilbereich der Unterseite der Kochfeldplatte insbesondere ein Teil des Gemischs verloren gehen, wie beispielsweise durch Rückstände in dem Gefäß, was bei einer Berechnung der benötigten Mengen insbesondere berücksichtigt werden könnte.

Das Schichtelement 14, insbesondere das Gemisch aus dem Trägerausgangsmaterial und dem Füllausgangsmaterial, verteilt sich im Wesentlichen gleichmäßig über den Teilbereich 16 der Unterseite 18 der Kochfeldplatte 12. Anschließend wird das an dem Teilbereich 16 angeordnete Schichtelement 14 ausgehärtet. Die Kochfeldplatte 12 und das auf der Kochfeldplatte 12 angeordnete Schichtelement 14 wird zu der Aushärtung an einem im Wesentlichen trockenen Ort für im Wesentlichen 24 Stunden bei Raumtemperatur, welche insbesondere im Wesentlichen 23°C beträgt, angeordnet. Während der Dauer der Aushärtung sollte von einer Berührung des Schichtelements 14 abgesehen werden.

In dem Teilbereich 16 weist die Kochfeldplatte 12 mehrere Vorsprünge 20 auf. Von mehrfach vorhandenen Objekten ist in den Figuren jeweils lediglich eines mit einem Bezugszeichen versehen. Die Vorsprünge 20 sind im Wesentlichen gleichverteilt über den Teilbereich 16 der Unterseite 18 der Kochfeldplatte 12 angeordnet. Im Folgenden wird lediglich einer der Vorsprünge 20 beschrieben.

Der Vorsprung 20 ist mit einem Grundkörper 26 der Kochfeldplatte 12 verbunden. Die Kochfeldplatte 12 weist den Grundkörper 26 auf. Der Vorsprung 20 springt von dem Grundkörper 26 hervor. Die Kochfeldplatte 12 ist einstückig ausgebildet.

Der Vorsprung 20 weist eine Höhe 24 auf. Ein maximal zu dem Grundkörper 26 beabstandeter Punkt des Vorsprungs 20 weist einen Abstand von der Höhe 24 zu dem Grundkörper 26 auf. In dem montierten Zustand ist der Vorsprung 20 im Wesentlichen von dem Schichtelement 14 umgeben.

In dem Teilbereich 16 weist das Schichtelement 14 eine Materialstärke 22 von zumindest der Höhe 24 des Vorsprungs 20 in Bezug auf den Grundkörper 26 der Kochfeldplatte 12 auf. Die Materialstärke 22 des Schichtelements 14 in dem Teilbereich 16 ist größer als die Höhe 24 des Vorsprungs 20 in Bezug auf den Grundkörper 26 der Kochfeldplatte 12.

Die Kochfeldvorrichtung 10 weist mehrere im Wesentlichen punktförmige Lichtquellen 28 auf. Von den Lichtquellen 28 ist in Fig. 2 lediglich eine dargestellt. Im Folgenden wird lediglich die dargestellte Lichtquelle 28 beschrieben. Die Lichtquelle 28 ist in einer Einbaulage unterhalb der Kochfeldplatte 12 angeordnet.

In einem Betriebszustand zerstreut das Schichtelement 14 von der im Wesentlichen punktförmigen Lichtquelle 28 ausgehende Lichtstrahlbündel 30 zumindest wesentlich. Von den Lichtstrahlbündeln 30 ist in Fig. 2 lediglich eines dargestellt. Im Folgenden wird lediglich das dargestellte Lichtstrahlbündel 30 beschrieben. Das Schichtelement 14 überführt in dem Betriebszustand das Lichtstrahlbündel 30 in diffuse Strahlung.

Das Schichtelement 14 und die Kochfeldplatte 12 weisen zumindest vergleichbare Brechungsindizes auf. Im vorliegenden Ausführungsbeispiel weisen das Schichtelement 14 und die Kochfeldplatte 12 im Wesentlichen die gleichen Brechungsindizes auf.

Alternativ zu einer Anordnung an der Kochfeldplatte könnte das Schichtelement insbesondere zu einer Anordnung an einem Wellenleiter und/oder an einer Glasfaser und/oder an einem Metall und/oder an einem Glas und/oder an einem Kunststoff vorgesehen sein.

### Bezugszeichen

- 10: Kochfeldvorrichtung
- 12: Kochfeldplatte
- 14: Schichtelement
- 16: Teilbereich
- 18: Unterseite
- 20: Vorsprung
- 22: Materialstärke
- 24: Höhe
- 26: Grundkörper
- 28: Lichtquelle
- 30: Lichtstrahlbündel
- 32: Kochfeld
- 34: Bedienerschnittstelle
- 36: Steuereinheit

## Patentansprüche

1. Kochfeldvorrichtung mit zumindest einer Kochfeldplatte (12) und mit zumindest einem wenigstens teilweise transluzenten Schichtelement (14), welches in wenigstens einem montierten Zustand an zumindest einem Teilbereich (16) einer Unterseite (18) der Kochfeldplatte (12) angeordnet ist und welches zumindest ein lichtundurchlässiges Füllmaterial aufweist, welches zumindest in einem Block-Zustand, in welchem das Material in Form eines Blocks angeordnet ist, und zwar in Form eines Würfels mit einer Kantenlänge von mindestens 1 cm vorliegt, wenigstens im Wesentlichen lichtundurchlässig ist, wobei das Schichtelement (14) zumindest ein wenigstens teilweise lichtdurchlässiges Trägermaterial aufweist, welches in zumindest einem Block-Zustand, in welchem das Material in Form eines Blocks angeordnet ist, und zwar in Form eines Würfels mit einer Kantenlänge von mindestens 1 cm vorliegt, wenigstens im Wesentlichen lichtdurchlässig ist, wobei das Füllmaterial zumindest Granulat-förmig ausgebildet ist, wobei Körner des Füllmaterials eine Korngröße in einem Bereich von 0,4 µm bis 0,9 µm aufweisen.

2. Kochfeldvorrichtung nach Anspruch 1, **dadurch gekennzeichnet, dass** das Trägermaterial aus zumindest einem wenigstens im Wesentlichen zähflüssigen Trägerausgangsmaterial hergestellt ist.

3. Kochfeldvorrichtung nach einem der vorhergehenden Ansprüche, **dadurch gekennzeichnet, dass** das Trägermaterial ein Nichtmetall ist.

4. Kochfeldvorrichtung nach Anspruch 3, **dadurch gekennzeichnet, dass** das Trägermaterial ein Silikon ist.

5. Kochfeldvorrichtung nach einem der vorhergehenden Ansprüche, **dadurch gekennzeichnet, dass** das Füllmaterial ein Metalloxid ist.

6. Kochfeldvorrichtung nach Anspruch 5, **dadurch gekennzeichnet, dass** das Füllmaterial ein Aluminiumoxid ist.

7. Kochfeldvorrichtung nach einem der vorhergehenden Ansprüche, **dadurch gekennzeichnet, dass** die Kochfeldplatte (12) in dem Teilbereich (16) zumindest einen Vorsprung (20) aufweist, welcher in dem montierten Zustand wenigstens im Wesentlichen von dem Schichtelement (14) umgeben ist.

8. Kochfeldvorrichtung nach Anspruch 7, **dadurch gekennzeichnet, dass** das Schichtelement (14) in dem Teilbereich (16) eine Materialstärke (22) von zumindest einer Höhe (24) des Vorsprungs (20) in Bezug auf einen Grundkörper (26) der Kochfeldplatte (12) aufweist.

9. Kochfeldvorrichtung nach einem der vorhergehenden Ansprüche, **dadurch gekennzeichnet, dass** das Schichtelement (14) und die Kochfeldplatte (12) zumindest vergleichbare Brechungsindizes aufweisen.

10. Kochfeldvorrichtung nach einem der vorhergehenden Ansprüche, **gekennzeichnet durch** zumindest eine wenigstens im Wesentlichen punktförmige Lichtquelle (28), wobei das Schichtelement (14) dazu vorgesehen ist, in wenigstens einem Betriebszustand zumindest ein von der Lichtquelle (28) ausgehenden Lichtstrahlbündel (30) zumindest wesentlich zu zerstreuen.

11. Kochfeld mit zumindest einer Kochfeldvorrichtung (10) nach einem der vorhergehenden Ansprüche.

12. Verfahren zur Herstellung einer Kochfeldvorrichtung (10) nach einem der Ansprüche 1 bis 10, wobei das Schichtelement (14) wenigstens teilweise durch ein Vermengen von zumindest einem Trägerausgangsmaterial und zumindest einem Füllausgangsmaterial hergestellt und anschließend an dem Teilbereich (16) der Unterseite (18) der Kochfeldplatte (12) angeordnet wird.

## Claims

1. Hob device having at least one hob plate (12) and having at least one at least partially translucent layer element (14) which, in at least one assembled state, is arranged on at least one partial area (16) of an underside (18) of the hob plate (12) and which has at least one opaque filler material which in at least one block state in which the material is arranged in the form of a block, namely is present in the form of a cube with an edge length of at least 1 cm, is at least substantially opaque, wherein the layer element (14) has at least one partially translucent carrier material which in at least one block state in which the material is arranged in the form of a block, namely is present in the form of a cube with an edge length of at least 1 cm, is at least substantially translucent, wherein the filler material is embodied as at least granular in shape, wherein grains of the filler material have a grain size in a range from 0.4 µm to 0.9 µm.

2. Hob device according to claim 1, **characterised in that** the carrier material is produced from at least one at least substantially viscous carrier raw material.

3. Hob device according to one of the preceding claims, **characterised in that** the carrier material is a non-metal.

4. Hob device according to claim 3, **characterised in that** the carrier material is a silicone.

5. Hob device according to one of the preceding claims, **characterised in that** the filler material is a metal oxide.

6. Hob device according to claim 5, **characterised in that** the filler material is an aluminium oxide.

7. Hob device according to one of the preceding claims, **characterised in that** the hob plate (12) has at least one projection (20) in the partial area (16) which, in the assembled state, is at least substantially surrounded by the layer element (14).

8. Hob device according to claim 7, **characterised in that** the layer element (14) in the partial area (16) has a material thickness (22) of at least one height (24) of the projection (20) in relation to a base body (26) of the hob plate (12).

9. Hob device according to one of the preceding claims, **characterised in that** the layer element (14) and the hob plate (12) have at least comparable refractive indices.

10. Hob device according to one of the preceding claims, **characterised by** at least one at least substantially point-shaped light source (28), wherein the layer element (14) is provided to at least substantially scatter at least one light beam (30) emanating from the light source (28) in at least one operating state.

11. Hob having at least one hob device (10) according to one of the preceding claims.

12. Method for producing a hob device (10) according to one of claims 1 to 10, wherein the layer element (14) is produced at least partially by mixing at least one carrier raw material and at least one filler raw material and is then arranged on the partial area (16) of the underside (18) of the hob plate (12).

## Revendications

1. Dispositif de champ de cuisson avec au moins une plaque de cuisson (12) et avec au moins un élément de couche (14) au moins partiellement translucide, disposé dans au moins un état monté en au moins une zone partielle (16) d'une face inférieure (18) de la plaque de cuisson (12) et qui présente au moins un matériau de remplissage opaque, lequel est présent au moins dans un état de bloc, dans lequel le matériau est disposé sous la forme d'un bloc, et ce sous la forme d'un cube présentant une longueur d'arêtes d'au moins 1 cm, lequel est au moins essentiellement opaque, dans lequel l'élément de couche (14) présente au moins un matériau de support au moins partiellement opaque, disposé au moins dans un état de bloc, dans lequel le matériau est disposé sous la forme d'un bloc, et ce sous la forme d'un cube présentant une longueur d'arêtes d'au moins 1 cm, lequel est au moins essentiellement opaque, dans lequel le matériau de remplissage est au moins formé sous la forme d'un granulat, les grains du matériau de remplissage présentant une granulométrie située dans une plage de 0,4 µm à 0,9 µm.

2. Dispositif de champ de cuisson selon la revendication 1, **caractérisé en ce que** le matériau de support est fabriqué au départ d'au moins un matériau de base pour support au moins essentiellement visqueux.

3. Dispositif de champ de cuisson selon l'une des revendications précédentes, **caractérisé en ce que** le matériau de support est un non-métal.

4. Dispositif de champ de cuisson selon la revendication 3, **caractérisé en ce que** le matériau de support est une silicone.

5. Dispositif de champ de cuisson selon l'une des revendications précédentes, **caractérisé en ce que** le matériau de remplissage est un oxyde métallique.

6. Dispositif de champ de cuisson selon la revendication 5, **caractérisé en ce que** le matériau de remplissage est un oxyde d'aluminium.

7. Dispositif de champ de cuisson selon l'une des revendications précédentes, **caractérisé en ce que** la plaque de cuisson (12) présente dans la zone partielle (16) au moins une saillie (20) qui, à l'état monté, est au moins essentiellement entourée par l'élément de couche (14).

8. Dispositif de champ de cuisson selon la revendication 7, **caractérisé en ce que** l'élément de couche (14) présente dans la zone partielle (16) une épaisseur de matériau (22) d'au moins une hauteur (24) de la saillie (20) par rapport à un corps de base (26) de la plaque de cuisson (12).

9. Dispositif de champ de cuisson selon l'une des revendications précédentes, **caractérisé en ce que** l'élément de couche (14) et la plaque de cuisson (12) présentent des indices de réfraction au moins comparables.

10. Dispositif de champ de cuisson selon l'une des revendications précédentes, **caractérisé par** au moins une source lumineuse (28) au moins essentiellement en forme de point, dans lequel l'élément de couche (14) est prévu afin de diffuser au moins essentiellement, dans au moins un état de fonctionnement au moins un faisceau de rayons lumineux (30) émanant de la source lumineuse (28).

11. Champ de cuisson avec au moins un dispositif de champ de cuisson (10) selon l'une des revendications précédentes.

12. Procédé de fabrication d'un dispositif de champ de cuisson (10) selon l'une des revendications 1 à 10, dans lequel l'élément de couche (14) est au moins partiellement fabriqué en mélangeant au moins un matériau de base pour support avec au moins un matériau de base pour remplissage et ensuite disposé sur la zone partielle (16) de la face inférieure (18) de la plaque de cuisson (12).
